# EUROPEAN PATENT SPECIFICATION

(11) **EP 1 499 118 B1**
(45) Date of publication and mention of the grant of the patent: **04.03.2009**
(21) Application number: 04254301.7
(22) Date of filing: 16.07.2004
(51) Int. Cl.: H04N 5/445, H04N 7/173

(54) **A method and system for optimizing the bandwidth for an audio/video network**
Verfahren und System zur Bandbreitenoptimierung eines Audio/Video-Netzwerks
Méthode et système pour optimiser l'occupation de la bande d'un réseau audio vidéo

(30) Priority: 16.07.2003 US 620674
(43) Date of publication of application: 19.01.2005
(73) Proprietor: The Directv Group, Inc., El Segundo, CA 90245 (US)
(72) Inventor: Patel, Harish N., Huntington Beach, California 92646 (US)
(74) Representative: Jackson, Richard Eric

(56) References cited:
- US-A- 5 081 534
- US-A- 5 297 204
- US-A- 5 386 251
- US-A- 5 589 039
- US-A1- 2002 152 473

## Description

### Technical Field

The present invention relates generally to a method and system for optimizing the bandwidth for an audio/video network, and more particularly, to a method and system for optimizing the bandwidth for a home television network through the use of smart remote controls and smart slave clients.

### Background Art

In a given network, such as an audio/video network for a single family home (SFN), a commercial establishment, or a multiple dwelling unit (MDU), the given network bandwidth is limited by the available technology. For example, phone line network and wireless network capacity for satellite television services, such as DIRECTV, is around 50 Mbps or less. In this type of network, there is usually a "master or gateway" box and possibly multiple "slave or thin" clients that are linked to the gateway box. The master box typically distributes authorized services to the slave clients within the network.

One problem that exists with the above system is that most users do not turn off the slave client or clients when they turn the associated television off. Thus, when the associated slave clients are left on, they are unnecessarily utilizing the network's capacity. This occurs because the master box still thinks that the slave client is being utilized even where the associated television is off. As is known, if there is a large number of slave clients on a network, the network capacity can be exceeded, thereby disrupting services. This is true, even if the users are not watching television, or are watching television, but are not utilizing the network services.

Currently, a user typically has a regular remote control and a slave client box. In order to completely disconnect from the network, the user must turn off both the television and the slave client. Similarly, to connect to the network, the user must turn on both the television and the slave client. If the user does not remember to turn off the slave client when the network services are not needed or are not being utilized and the bandwidth on the network is completely utilized, then an appropriate message will be displayed on the television screen informing the user to go and turn off the slave client in another room or location.

Moreover, turning the slave clients off, while preventing the unnecessary use of "bandwidth," can cause other problems. For example, if the slave clients are turned off, one or more cached databases in the slave client can go stale depending upon how long the slave client remains off. When the slave client is turned off long enough such that one or more cached databases become stale, a warm up time is required when the slave client is turned on. This warm up time can be anywhere from thirty (30) seconds to five (5) minutes or more, before the user can begin using the cashed databases again.

US 2002/0152473 A1 describes a broadcast receiver with a wake-up switch operable to power components needed to receive broadcast programs, software and firmware updates without indicating a power-on condition to a user.

### Summary of the Invention

It is therefore an object of the present invention to provide a method and system for optimizing bandwidth resources in an audio/video network.

It is another object of the present invention to provide an audio/video network having a smart remote control and a smart slave client that assists in optimizing bandwidth resources.

The present invention is defined in the appendant claims.

Other features and advantages of the present invention will become apparent from the following description of the invention when viewed in accordance with the accompanying drawings and appended claims.

### Brief Description of the Drawings

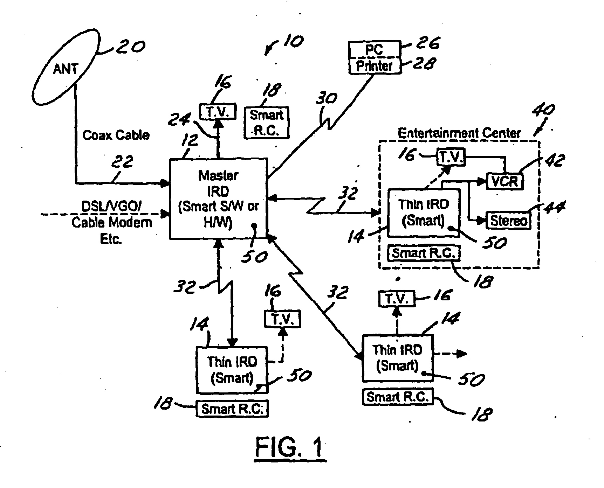

Figure 1 is a schematic block diagram illustrating a preferred system for optimizing bandwidth in an audio/video network in accordance with the present invention.

### Detailed Description of the Preferred Embodiment

Turning now to Figure 1, which is a block diagram schematically illustrating the preferred method and system for optimizing network bandwidth. A preferred application for the disclosed system is as part of the DIRCTV® Satellite System, however, it may be utilized for, or as part of, a variety of other applications. It will be understood that the system can be utilized at single family homes, commercial establishments, multiple dwelling units, or at a variety of other locations. The principal components of the system 10 include a master or gateway box 12, one or more slave clients 14, a television 16, one or more remote control units 18, and an antenna 20. These components generally form an audio/video network system. The network system 10 has a given bandwidth limited in its throughput as defined by the technology being used, such as for example phone lines, power lines, wireless or any other type of network connections.

As shown, the gateway box 12, such as a Master IRD for the DIRCTV® system, has necessary hardware and software components therein, which allow it to operate as required. For example, the gateway box 12 preferably includes a cable modem and multiple ports that allow for connection of one or more of the slave clients 14. The gateway box 12 is preferably in communication with the antenna 20 through a coaxial cable 22 or the like to allow the gateway box 12 to receive audio and visual information received at the antenna 20. The gateway box 12 may also communicate with the antenna 20 in order to cause the antenna 20 to transmit information as desired. The antenna 20 preferably receives information from and transmits information to a remote host computer system via satellite communication, as is well known in the art.

The gateway box 12 is in communication with the television 16 via communication line 24 in order to cause audio and visual information received at the antenna 20 and transmitted to and processed by the gateway box 12 to be displayed at the television 16. The gateway box 12 is also preferably in communication with a computer 26 and an associated printer 28 via standard communication line 30. Communication lines as used herein means phone lines, cable, wireless communication or any other known means for communicating information from one device to another. The computer connection allows a user of the system 10 to print off a variety of reports, including information about the system 10 as well as the system usage by the user. Alternatively, the system 10 can cause information to be printed at the printer 28 based on information received at the gateway box 12.

Additionally, the gateway box 12 is preferably in communication with a plurality of slave clients 14 such as slave IRDs for the DIRCTV® system. The disclosed embodiment illustrates three slave clients 14, however, it will be understood that any number of slave clients 14 may be utilized as desired by the user. The gateway box 12 preferably distributes authorized services to the slave clients 14 within the network via communication lines 32. Each of the slave clients 14 preferably has a television 16 associated therewith.

The system 10 preferably incorporates one or more remote control units 18. The remote control units 18 are intended to control the operation of one or more of the televisions 16 associated with a respective one of the slave clients 14 or with the gateway box 12. Additionally, the remote control units 18 are utilized to turn one or more of the respective televisions on or off.

Each of the remote control units 18 is preferably a smart remote control unit. The smart remote control unit 18 preferably has hardware and/or software built therein that allows the smart remote control unit 18 to perform the necessary functions discussed below. Normally, when a typical remote control unit is used to shut off the television 16, the associated slave client 14 will be left on, which unnecessarily utilizes the network's capacity. This occurs because the gateway box 12 thinks that the slave client 14 is being utilized despite the fact that the television 16 is off. In accordance with the preferred embodiment, the smart remote control unit 18 sends a unique signal to the associated slave client 14 informing it that the associated television 16 has been turned on or off. When a user turns the television 16 off by using the associated smart remote control 18, the signal will inform the associated slave client 14 or will be interpreted by the associated slave client 14 that the slave client does not need to receive information from the gateway box 12, as the television 16 is off. The slave client 14 thus instructs the gateway box 12 to stop transmitting data to that slave client 14. Similarly, when the user turns the television 16 on, the associated slave client 14 will take proper steps to get online and prepare to serve the user. This action and reaction will be seamless to the user.

In the preferred embodiment, there are a variety of ways to accomplish the above outlined task. One way to accomplish the task is to have the smart remote control unit 18 send a signal to the associated slave client 14 to turn both the television and the associated slave client 14 on and off at the same time. Alternatively, the remote control unit 18 can send a unique signal or signals to the slave client 14 when the user turns the associated television on or off by using the remote informing the slave client 14 that the television 16 has been turned off. This alternative implementation will place the slave client 14 in a sleep mode, which will allow the slave client 14 to update its databases, without the gateway box 12 believing the slave client 14 is on and therefore not wasting network resources unnecessarily.

In the sleep mode, the slave clients 14 can update their databases, like APG, which is part of the DIRCTV^{®} system, so there will be no "warm up" time required if a particular slave client 14 has not been used for several hours to several days or longer. Thus, in the sleep mode, the slave client 14 will allow recording utilizing the gateway box 12 as the access.

In an alternative embodiment, the remote control units 18 are conventional off the shelf remote control units, but the slave clients 14 are modified to make them smarter. This can be accomplished by having software and/or hardware built into the slave client 14 that learns the appropriate remote control codes associated with different electronic entertainment devices. As shown in the Figure, a slave client 14 can be part of an entertainment center 40, including a television 16, a VCR 42, and a stereo 44. It will be understood that a variety of other entertainment devices may also be utilized in accordance with present invention.

As shown in this exemplary embodiment, the television 18 is connected to the slave client 14 through the VCR 32. However, in accordance with the preferred embodiment, the VCR 32 and other entertainment devices will be treated the same way. That is, if the television 16 is turned off, then the slave client 14 will be turned to an off or sleep mode, as predetermined by the system or as selected by the user. This is preferably accomplished because, as the slave client 14 has learned the remote control codes associated with the different configurations, it can determine if the VCR 32 or any electronic equipment through which the television 16 is connected is turned on or off and thus whether the television is turned on or off. The smart slave clients 14 will have the same effect of optimizing network bandwidth. In fact, the smart slave clients 14 will know how much bandwidth is being used and how much is available and thus will be able to serve the user appropriately. It will be understood that the smart remote control units 18 and the smart slave clients 14 may be used independently of one another or may be used collectively or together.

Additionally, the front panel of each slave client 14 preferably has one or more LED indicators 50 that are visible to the user. In the preferred embodiment, a single LED indicator 50 is present on each slave client 14. The LED indicator 50 has three states. In the first state, it is colored green to indicate that the slave client 14 is on and is being utilized by the television 16 and/or the VCR 42. In the second state, the LED indicator 50 is colored yellow to indicate that the slave client 14 is in a sleep mode, i.e., when it is powered down and is only communicating with the gateway box 12 to keep its databases current. In the third state, the LED indicator 50 is colored red to indicate that the slave client 14 is not being used.

While a preferred embodiment of the present invention has been described so as to enable one skilled in the art to practice the present invention, it is to be understood that variations and modifications may be employed without departing from the scope of the present invention, as defined in the following claims.

## Claims

1. A system (10) for optimizing the bandwidth on an audio/video network, said system (10) comprising:
at least one slave client (14) in communication with a master box (12) for receiving network services at said at least one slave client (14);
a remote control unit (18) for communicating with said at least one slave client (14);
a television (16) operable for communication with said at least one slave client (14) and said remote control (18), said television (16) having an on condition and an off condition;
wherein when said television (16) is turned on or off by said remote control unit (18), said at least one slave client (14) is operable to determine whether said television (16) is in said on condition or said off condition and the slave client (14) is configured to instruct the master box (12) not to transmit network services to the slave client (14) when said television (16) is turned off.

2. The system of claim 1, wherein when said television (16) is turned off by said remote control unit (18), a signal is transmitted to said at least one slave client (14) to turn it off to stop the transmission of data to said at least one slave client (14) from said master box (12).

3. The system of claim 1, wherein when said television (16) is turned off by said remote control unit (18), a signal is transmitted to said at least one slave client (14) to place said at least one slave client (14) in a sleep mode, which allows said slave client (14) to update databases from said master box (12), but it is otherwise off.

4. The system of claim 1, wherein said at least one slave client (14) includes a learning module that allows said at least one slave client (14) to learn appropriate remote control codes associated with other entertainment devices.

5. The system of claim 4, wherein said at least one remote control (18) is a standard remote control and said at least one slave client (14) determines the status of said television (16), based on said learned remote control codes.

6. A method for optimizing the bandwidth on an audio/video network system (10), comprising:
providing at least one slave client (14) that is in communication with a master box (12) to receive audio and video information therefrom;
providing a remote control unit (18) for communicating with said at least one slave client (14);
communicating a signal from said remote control unit (18) to said at least one slave client (14) when a television (16) is turned on or off; and
placing said at least one slave client (14) in an appropriate state based on said signal received from said remote control unit (18),
wherein the slave client (14) is configured to instruct the master box (12) not to transmit audio and video information therefrom to the slave client (14) when said television (16) is turned off.

7. The method of claim 6, further comprising:
programming said remote control unit (18) to send a signal to said at least one slave client (14) when said television (16) is turned on or off.

8. The method of claim 7, further comprising:
turning said at least one slave client (14) off when said signal received from said remote control unit (18) indicates that said television (16) is turned off, in order to stop transmission of data to said at least one slave client (14).

9. The method of claim 7, further comprising:
placing said at least one slave client (14) in a sleep mode when said signal received from said remote control unit (18) indicates that said television (16) is turned off, such that it may still update its databases as necessary, and it is in sleep mode for an extended period of time.

10. The method of claim 6, further comprising;
programming said at least one slave client (14) to learn signals from said remote control unit (18) to determine when said television (16) is turned on or off.

## Patentansprüche

1. System (10) zum Optimieren der Bandbreite in einem Audio/Videonetzwerk, wobei das System (10) aufweist:
zumindest einen Slave Client (14), der mit einer Masterbox (12) in Verbindung steht, um Netzwerkdienste an dem zumindest einen Slave Client (14) zu empfangen;
eine Fernbedienungseinheit (18) zur Kommunikation mit dem zumindest einen Slave Client (14);
einen Fernseher (16), der ausgelegt ist, um mit dem zumindest einen Slave Client (14) und der Fernbedienung (18) zu kommunizieren, wobei der Fernseher (16) einen Ein- und einen Aus-Zustand hat;
wobei, wenn der Fernseher (16) über die Fernbedienungseinheit (18) ein- oder ausgeschaltet wird, der zumindest eine Slave Client (14) ausgelegt ist, um zu bestimmen, ob der Fernseher (16) in dem Ein- oder dem Aus-Zustand ist, und wobei der Slave Client (14) konfiguriert ist, um die Masterbox (12) anzuweisen, keine Netzwerkdienste an den Slave Client (14) zu senden, wenn der Fernseher (16) ausgeschaltet ist.

2. System nach Anspruch 1, wobei, wenn der Fernseher (16) durch die Fernbedienungseinheit (18) ausgeschaltet wurde, ein Signal zu dem zumindest einen Slave Client (14) gesendet wird, um ihn auszuschalten, um die Übertragung von Daten zu dem zumindest einen Slave Client (14) von der Masterbox (12) zu unterbrechen.

3. System nach Anspruch 1, wobei, wenn der Fernseher (16) durch die Fernbedienungseinheit (18) ausgeschaltet wurde, ein Signal zu dem zumindest einen Slave Client (14) gesendet wird, um den zumindest einen Slave Client (14) in einen Schlafmodus zu versetzen, der es dem Slave Client (14) ermöglicht, die Datenbanken von der Masterbox (12) zu aktualisieren, der aber ansonsten aus ist.

4. System nach Anspruch 1, wobei der zumindest eine Slave Client (14) ein Lernmodul aufweist, dass es dem zumindest einen Slave Client (14) ermöglicht, passende Fernbedienungscodes zu lernen, die mit anderen Unterhaltungsgeräten verknüpft sind.

5. System nach Anspruch 4, wobei die zumindest eine Fernbedienung (18) eine Standardfernbedienung ist und der zumindest eine Slave Client (14) den Status des Fernsehers (16) basierend auf den gelernten Fernbedienungscodes bestimmt.

6. Verfahren zur Optimierung der Bandbreite in einem Audio/Videonetzwerksystem (10), mit:
Feststellen von zumindest einem Slave Client (14), der in Verbindung steht mit einer Masterbox (12), um Audio- und Videoinformation von dort zu empfangen;
Bereitstellen einer Fernbedienungseinheit (18) zur Kommunikation mit dem zumindest einen Slave Client (14);
Übertragen eines Signals von der Fernbedienungseinheit (18) zu dem zumindest einen Slave Client (14), wenn ein Fernseher (16) ein- oder ausgeschaltet wird; und
Versetzen des zumindest einen Slave Clients (14) in einen geeigneten Zustand basierend auf dem Signal, das von der Fernbedienungseinheit (18) empfangen wurde,
wobei der Slave Client (14) konfiguriert ist, um die Masterbox (12) anzuweisen, keine Audio- und Videoinformation von dort an den Slave Client (14) zu senden, wenn der Fernseher (16) ausgeschaltet wird.

7. Verfahren nach Anspruch 6, ferner mit:
Programmieren der Fernbedienungseinheit (18), um ein Signal an den zumindest einen Slave Client (14) zu senden, wenn der Fernseher (16) ein- oder ausgeschaltet wird.

8. Verfahren nach Anspruch 7, ferner mit:
Ausschalten des zumindest einen Slave Clients (14), wenn das Signal, das von der Fernbedienungseinheit (18) empfangen wurde, anzeigt, dass der Fernseher (16) ausgeschaltet wurde, um die Übertragung von Daten an den zumindest einen Slave Client (14) zu unterbrechen.

9. Verfahren nach Anspruch 7, ferner mit:
Versetzen des zumindest einen Slave Clients (14) in einen Schlafmodus, wenn das Signal, das von der Fernbedienungseinheit (18) empfangen wurde, anzeigt, dass der Fernseher (16) ausgeschaltet wurde, derart, dass er noch seine Datenbanken wenn notwendig aktualisieren kann und der für eine ausgedehnte Zeitdauer im Schlafmodus ist.

10. Verfahren nach Anspruch 6, ferner mit:
Programmieren des zumindest einen Slave Clients (14), um Signale von der Fernbedienungseinheit (18) zu lernen, um zu erkennen, wenn der Fernseher (16) ein- oder ausgeschaltet wird.

## Revendications

1. Système (10) pour optimiser la bande passante sur un réseau audio/vidéo, ledit système (10) comportant :
au moins un client asservi (14) en communication avec un boîtier maître (12) pour recevoir des services de réseau audit, au moins un, client asservi (14) ;
une unité de commande à distance (18) pour communiquer avec ledit, au moins un, client asservi (14) ;
un téléviseur (16) pouvant être mis en oeuvre pour une communication avec ledit, au moins un, client asservi (14) et ladite commande à distance (18), ledit téléviseur (16) ayant une condition d'activation et une condition de désactivation ;
dans lequel, lorsque ledit téléviseur (16) est activé ou désactivé par ladite unité de commande à distance (18), ledit, au moins un, client asservi (14) peut être mis en oeuvre pour déterminer si ledit téléviseur (16) est dans ladite condition d'activation ou dans ladite condition de désactivation et le client asservi (14) est configuré pour demander par instruction au boîtier maître (12) de ne pas transmettre de services de réseau au client asservi (14) lorsque ledit téléviseur (16) est désactivé.

2. Système selon la revendication 1, dans lequel, lorsque ledit téléviseur (16) est désactivé par ladite unité de commande à distance (18), un signal est transmis audit, au moins un, client asservi (14) pour le désactiver afin d'arrêter la transmission de données, audit, au moins un, client asservi (14) depuis ledit boîtier maître (12).

3. Système selon la revendication 1, dans lequel, lorsque ledit téléviseur (16) est désactivé par ladite unité de commande à distance (18), un signal est transmis audit, au moins un, client asservi (14) pour placer ledit, au moins un, client asservi (14) dans un mode en sommeil, qui permet audit client asservi (14) de mettre à jour des bases de données à partir dudit boîtier maître (12), alors qu'il est autrement désactivé.

4. Système selon la revendication 1, dans lequel, ledit, au moins un, client asservi (14) comprend un module d'apprentissage qui permet audit, au moins un, client asservi (14) d'apprendre des codes de commande à distance appropriés associés à d'autres dispositifs de divertissement.

5. Système selon la revendication 4, dans lequel, ladite, au moins une, commande à distance (18) est une commande à distance normalisée et ledit, au moins un, client asservi (14) détermine l'état dudit téléviseur (16), sur la base desdits codes de commande à distance appris.

6. Procédé pour optimiser la bande passante sur un système (10) à réseau audio/vidéo, comprenant :
l'utilisation d'au moins un client asservi (14) qui est en communication avec un boîtier maître (12) pour en recevoir des informations audio et vidéo ;
l'utilisation d'une unité de commande à distance (18) pour communiquer avec ledit, au moins un, client asservi (14) ;
la communication d'un signal de ladite unité de commande à distance (18) audit, au moins un, client asservi (14) lorsqu'un téléviseur (16) est activé ou désactivé ; et
la mise en place dudit, au moins un, client asservi (14) dans un état approprié basé sur ledit signal reçu de ladite unité de commande à distance (18),
dans lequel le client asservi (14) est configuré pour demander par inspection audit boîtier maître (12) de ne pas transmettre depuis elle-même des informations audio et vidéo au client asservi (14) lorsque ledit téléviseur (16) est désactivé.

7. Procédé selon la revendication 6, comprenant en outre :
la programmation de ladite unité de commande à distance (18) pour envoyer un signal audit, au moins un, client asservi (14) lorsque ledit téléviseur (16) est activé ou désactivé.

8. Procédé selon la revendication 7, comprenant en outre :
la désactivation dudit, au moins un, client asservi (14) lorsque ledit signal reçu de ladite unité de commande à distance (18) indique que ledit téléviseur (16) est désactivé, afin d'arrêter la transmission de données audit, au moins un, client asservi (14).

9. Procédé selon la revendication 7, comprenant en outre :
le fait de placer ledit, au moins un, client asservi (14) dans un mode en sommeil lorsque ledit signal reçu de ladite unité de commande à distance (18) indique que ledit téléviseur (16) est désactivé, de manière qu'il puisse encore mettre à jour ses bases de données si cela est nécessaire, et il est dans un mode en sommeil pendant une période de temps prolongée.

10. Procédé selon la revendication 6, comprenant en outre :
la programmation dudit, au moins un, client asservi (14) pour apprendre des signaux provenant de ladite unité de commande (18) afin de déterminer lorsque ledit téléviseur (16) est activé ou désactivé.
